# FASCICULE DE BREVET EUROPEEN

(11) **EP 2 659 283 B1**
(45) Date de publication et mention de la délivrance du brevet: **28.09.2022**
(21) Numéro de dépôt: 11801758.1
(22) Date de dépôt: 23.12.2011
(51) Int. Cl.: G01S 7/497, H04J 3/06

(54) **PROCEDE DE SYNCHRONISATION DE SYSTEMES OPTRONIQUES ET ENSEMBLE DE SYSTEMES OPTRONIQUES SYNCHRONISES SELON CE PROCEDE**
VERFAHREN ZUR SYNCHRONISIERUNG OPTRONISCHER SYSTEME UND NACH DIESEM VERFAHREN SYNCHRONISIERTE ANORDNUNG AUS OPTRONISCHEN SYSTEMEN
METHOD OF SYNCHRONIZING OPTRONIC SYSTEMS AND SET OF OPTRONIC SYSTEMS SYNCHRONIZED ACCORDING TO THIS METHOD

(30) Priorité: 27.12.2010 FR 1005124
(43) Date de publication de la demande: 06.11.2013
(73) Titulaire: THALES, 92200 Neuilly-sur-Seine (FR)
(72) Inventeur: MIDAVAINE, Thierry, 78995 Elancourt Cedex (FR)
(74) Mandataire: Lavoix
(86) Numéro de dépôt international: PCT/EP2011/073996
(87) Numéro de publication internationale: WO 2012/089682

(56) Documents cités:
- WO-A1-2010/084245
- GB-A- 2 426 164
- KR-A- 20040 064 966
- US-A1- 2002 073 228
- US-A1- 2008 287 153

## Description

La présente invention concerne un procédé de synchronisation de systèmes optroniques, du type fonctionnant simultanément sur une même scène, chaque système optronique étant destiné à émettre et/ou recevoir de la lumière d'une cible de la scène et chaque système optronique comportant une horloge interne de précision et un module propre de synchronisation de l'horloge interne avec un signal horaire de référence.

L'invention concerne également un ensemble de systèmes optroniques synchronisés selon ce procédé de synchronisation.

Plus particulièrement, l'invention se rapporte au domaine des systèmes optroniques, tels que des systèmes d'armes et des systèmes d'observation ou de surveillance, amenés à fonctionner simultanément sur un même théâtre ou une même scène.

Certains systèmes optroniques émettent des trains d'impulsions électromagnétiques en direction d'une cible de la scène pour la désigner ou pour l'identifier. Ces impulsions électromagnétiques sont de préférence des impulsions lumineuses, par exemple émises à partir de lampes flash ou de lasers.

D'autres systèmes optroniques réalisent des acquisitions d'images ou de séquences d'images de la scène avec des temps d'expositions variables. Certains effectuent des balayages d'une ligne de visée dans la scène ou déclenchent des dispositifs d'obturation. D'autres encore réalisent des mesures de localisation de la cible ou des mesures d'écartements angulaires et de positions entre la direction d'une cible de la scène (tel qu'un char, un avion) et la direction d'un engin (tel qu'un missile) par exemple, ou encore par des mesures d'orientation de la ligne de visée et de distance entre la cible et le système optronique.

Certains composants de ces systèmes optroniques sont ainsi commandés par une loi de comportement temporelle nécessitant des précisions par exemple, de l'ordre de la nanoseconde pour des impulsions laser jusqu'à la milliseconde pour des caméras.

La difficulté est de synchroniser toutes ces opérations sans dévoiler les systèmes optroniques en fonctionnement sur la scène.

En particulier, afin d'améliorer leur mode de fonctionnement, leur portée ou leur précision, il est utile que ces systèmes optroniques indépendants fonctionnent de manière synchrone.

C'est le cas par exemple de systèmes optroniques semi-actifs laser avec d'une part un système d'émission laser fonctionnant à une certaine cadence et d'autre part des systèmes d'acquisition tels qu'un écartomètre ou un imageur cherchant à acquérir l'image du spot/tache d'illumination laser désignant ou identifiant la cible dans la scène.

Un autre exemple est le cas de caméras mobiles indépendantes cherchant à se synchroniser pour améliorer par exemple la restitution 3D d'une même scène comprenant des mobiles, par exemple des objets ou cibles se déplaçant dans la scène, ces caméras pouvant en outre être montées sur des plateformes indépendantes elles même mobiles.

C'est également le cas pour un imageur que l'on désire protéger d'un brouilleur laser impulsionnel ami en effectuant le contrôle du temps d'exposition pour les acquisitions d'images entre l'émission des impulsions successives émises par le brouilleur.

Il est connu que la synchronisation de ces opérations est réalisée en délivrant un signal par une liaison filaire ou une liaison hertzienne de synchronisation de l'un des systèmes optroniques aux autres systèmes optroniques à synchroniser si cela est possible. Néanmoins, la solution filaire impose la colocalisation des systèmes optroniques devant fonctionner ensemble et se distribuant le signal de synchronisation.

En effet, si les systèmes optroniques ne sont pas colocalisés, ils doivent se transmettre par faisceau hertzien les signaux de synchronisation. Dans ce cas, une tolérance de synchronisation est nécessaire, compte tenu du temps de propagation de la liaison hertzienne. Par exemple, pour une distance de 300 m, il y a un retard de 1 µs compte tenu de la propagation à la vitesse de la lumière. Pour réduire cette tolérance, il est nécessaire d'employer une méthode pour déterminer ce temps de propagation pour le compenser.

Une autre possibilité est d'incorporer un détecteur, dans les systèmes optroniques à synchroniser, apte à acquérir un signal optique, par exemple un train d'impulsions laser, émis par un des systèmes optroniques pour réaliser la synchronisation sur au moins une de ces impulsions laser. Néanmoins, cela nécessite l'émission d'un signal optique par un des systèmes optroniques détectable par des systèmes optroniques ennemis.

En outre, les systèmes optroniques devant détecter les impulsions laser d'illumination doivent avoir un temps d'exposition continu long pour réaliser la détection avec l'inconvénient de réduire le contraste entre la tache de l'impulsion laser et la scène et ainsi la portée des systèmes optroniques.

Ainsi, il n'est pas possible de synchroniser des équipements indépendants passifs sans transmettre, entre les différents systèmes optroniques fonctionnant sur une même scène, un signal hertzien émis par un des systèmes optroniques, ni de synchroniser des équipements indépendants actifs ou semi-actifs dès la première impulsion laser émise par un des systèmes optroniques.

Il est connu du document WO 2010/084245 un module opérationnel pour un instrument de mesure optique. Un tel module opérationnel comprend un transmetteur propre à transférer et à recevoir des messages de synchronisation en provenance d'autres systèmes optroniques.

Les documents US 2002/0073228 A, US 2008/0287153 A, GB 2 426 164 A, KR 2004/0064966 A décrivent des exemples de procédé de synchronisation.

Le but de l'invention est de fournir un procédé et un dispositif de synchronisation de plusieurs systèmes optroniques fonctionnant sur une même scène sans l'émission d'un signal depuis un des systèmes optroniques détectable par un ennemi.

A cet effet, l'invention a pour objet un procédé de synchronisation selon la revendication 1.

Suivant des modes particuliers de réalisation, le procédé de synchronisation comporte l'une ou plusieurs des caractéristiques des revendications 2 à 6.

L'invention a également pour objet un ensemble de systèmes optroniques selon la revendication 7.

Suivant des modes particuliers de réalisation, l'ensemble de systèmes optroniques comporte l'une ou plusieurs des caractéristiques des revendications 8 et 9.

L'invention sera mieux comprise à la lecture de la description qui va suivre, donnée uniquement à titre d'exemple, et faite en se référant aux dessins, sur lesquels :
- la figure 1 est un schéma synoptique illustrant un premier mode de réalisation d'un ensemble de systèmes optroniques synchronisés selon l'invention,
- les figures 2 et 3 sont des schémas synoptiques détaillés de deux modes de réalisation d'un module de synchronisation d'un des systèmes optroniques synchronisés de la figure 1,
- la figure 4 est un schéma bloc illustrant le procédé de synchronisation mis en oeuvre par l'ensemble des systèmes optroniques synchronisés de la figure 1, et
- la figure 5 est un schéma synoptique illustrant un autre mode de réalisation d'un ensemble de systèmes optroniques synchronisés selon l'invention.

L'invention concerne un procédé de synchronisation de plusieurs systèmes optroniques fonctionnant simultanément sur une même scène et un ensemble des systèmes optroniques synchronisés selon ce procédé.

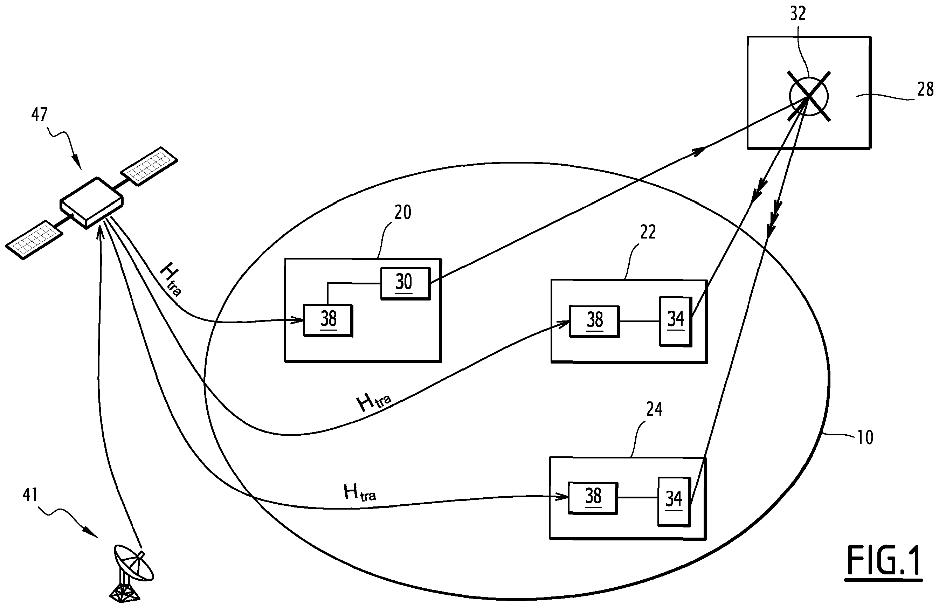

La figure 1 illustre un premier mode de réalisation d'un ensemble 10 ou parc de systèmes optroniques 20, 22, 24 fonctionnant sur une même scène et destinés à être synchronisés ensemble selon l'invention.

De façon connue, au moins un système optronique 20 du parc 10 est apte à émettre un train d'impulsions lumineuses en direction d'une cible 28 de la scène afin de la désigner ou de l'identifier optiquement pour les autres systèmes optroniques du parc 10, tandis qu'au moins un système 22, 24 des systèmes optroniques du parc 10 est apte à détecter au moins ce train d'impulsions lumineuses désignant ou identifiant cette cible 28.

Pour cela, le système optronique 20 comporte des moyens d'émission 30 de trains d'impulsions électromagnétiques, de préférence d'impulsions laser, en direction de la cible pour former une tache 32 ou spot d'illumination sur la cible 28.

Par exemple, le système optronique 20 est un fantassin équipé d'un moyen de visée ou de jumelles comportant ou étant connecté à de tels moyens d'émission 30.

En outre, les systèmes optroniques 22, 24 aptes à détecter ce train d'impulsions lumineuses comprennent chacun des moyens de détection 34 du spot d'illumination 32.

Par exemple, les systèmes optroniques 22 et 24 sont des plateformes aériennes (avion) ou terrestres (blindé) ou encore d'autres soldats, destinées à soutenir le fantassin dans sa mission, qui comprennent de tels moyens de détection 34. De plus, les plateformes sont par exemple équipées de munitions à guidage laser, qui à partir de la détection des impulsions électromagnétiques sont guidées vers la cible 28 afin de la neutraliser.

Selon un autre exemple, le système optronique 20 est une plateforme aérienne comportant des moyens de désignation laser, c'est-à-dire des moyens comprenant des moyens d'émission laser servant à illuminer une cible afin de guider une arme ou de faciliter la visée d'une arme légère. Les systèmes optroniques 22 et 24 sont des fantassins validant la bonne désignation laser de la cible pour engager la réaction ou sont d'autres plateformes aériennes équipées d'engins se guidant sur la désignation laser, par exemple un missile, une bombe...

Chaque système optronique 20, 22, 24 comprend un module 38 de génération d'un signal de synchronisation connecté à des moyens de commandes de composants intégrés dans les systèmes optroniques 20, 22, 24. Le module 38 de génération d'un signal de synchronisation est adapté pour transmettre le signal de synchronisation généré aux moyens de commandes des composants devant être synchronisés.

Par exemple, le signal de synchronisation généré est utilisé pour commander les moyens d'émission 30 et/ou les moyens de détection 34 des trains d'impulsions électromagnétiques.

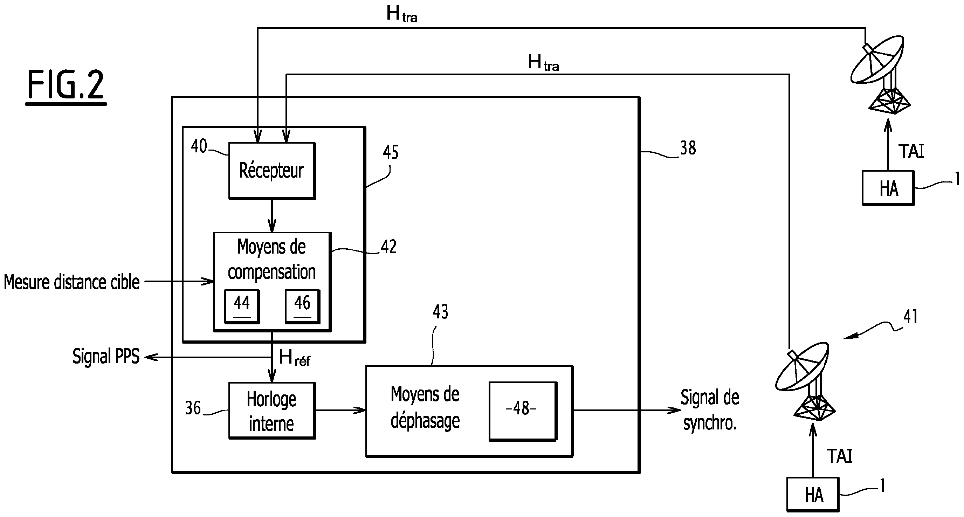

Un module 38 de génération d'un signal de synchronisation d'un système optronique 20, 22, 24 est détaillé en regard de la figure 2.

Le module 38 comporte une horloge interne de précision 36 et un module propre de synchronisation 45 connecté à l'horloge interne 36.

Le module propre de synchronisation 45 est adapté pour transmettre à l'horloge interne un deuxième signal horaire de référence, noté H_{ref}, pour que celle-ci se synchronise dessus.

L'horloge interne est synchronisée en permanence ou périodiquement sur le deuxième signal horaire de référence H_{ref}.

Par exemple, l'horloge interne de précision 36 est un oscillateur à quartz ou un autre oscillateur à haute fréquence tel qu'une horloge atomique secondaire.

En outre, chaque module 45 propre de synchronisation comporte un récepteur 40 d'au moins un premier signal comportant un code horaire de référence Hₜᵣₐ transmis par un réseau.

Le module 45 est adapté pour délivrer le deuxième signal de référence H_{ref} à l'horloge interne de précision 36 à partir du premier signal comportant le code horaire de référence Hₜᵣₐ.

De préférence, le premier signal horaire de référence Hₜᵣₐ est un signal représentant le temps atomique international (TAI) ou le Temps Universel Coordonné (UTC) diffusé par un réseau de communication.

Le TAI est généré par un réseau d'horloges atomiques primaires 1 sur Terre, chacune connectée à une antenne 41 d'un réseau terrestre adaptée pour transmettre ce signal TAI au réseau de communication.

Le Temps Universel Coordonné est un système de datation piloté par le TAI et décalé d'un nombre entier de secondes (déterminé chaque année ou bi-annuellement) afin de distribuer un système de datation terrestre ayant moins de 0,9 s d'écart avec la rotation de la Terre.

De façon préférentielle, le réseau de communication est constitué par des antennes 41 de transmission électromagnétiques qui existent dans de nombreux pays comme l'émetteur l'Allouis pour la France ou l'émetteur DCF77 situé prés de Francfort pour l'Allemagne.

En outre, le module 45 propre de synchronisation comprend des moyens de compensation 42 connectés au récepteur 40 et adaptés pour générer le deuxième signal horaire de référence H_{ref} à partir du premier signal horaire de référence Hₜᵣₐ.

Le deuxième signal de référence H_{ref} est calculé à partir du premier signal horaire de référence transmis Hₜᵣₐ afin de prendre en compte un retard variable engendré par le temps de transmission de ce premier signal au sein du réseau.

L'horloge interne est adaptée pour délivrer un premier signal de synchronisation, par exemple, un signal TTL (pour « Transistor-Transistor Logic », en anglais) à la fréquence ou aux fréquences employées par l'équipement optronique.

En outre, l'horloge interne de précision 36 est adaptée pour conserver avec une précision suffisante le temps entre deux périodes de rafraîchissement du deuxième signal horaire de référence H_{ref} transmis par le module propre de synchronisation 45.

Par exemple, la stabilité de l'horloge interne de précision est de 1 ppm (pour une partie par million) soit 1µs pour 1s.

Chaque module de génération d'un signal de synchronisation 38 comprend des moyens propres de déphasage 43 de ce premier signal de synchronisation délivré par l'horloge interne de chaque système optronique 20, 22, 24.

Les moyens de déphasage 43 sont adaptés pour introduire/ajouter un premier déphasage *ϕ_{A}* au signal horloge interne délivré par l'horloge interne et synchronisé sur le TAI. Les moyens de déphasage 43 sont propres à générer un signal de synchronisation déphasé par rapport au signal de synchronisation délivré par l'horloge interne 36.

En outre, les moyens de déphasage 43 comportent des moyens de stockage du premier déphasage *ϕ_{A}*.

De préférence, ce premier déphasage *ϕ_{A}* est prédéterminé (par l'industriel fabricant, le pays, ou encore l'utilisateur). Par exemple, ce premier déphasage *ϕ_{A}* est fixé à 48 µs pour tout un parc de systèmes optroniques pour un pays, ou pour un client ou encore pour une opération par exemple.

Selon une variante, les moyens de déphasage 43 comportent des moyens de génération 48 du premier déphasage *ϕ_{A}* par un code pseudo aléatoire prédéterminé enregistré ou construit par un algorithme dans les moyens de stockage et de calcul des moyens de déphasage 43.

En outre, chaque module propre de synchronisation 45 comporte des moyens de compensation ou d'ajustement 42 de la phase du signal horaire de référence en fonction de la localisation du système optronique dans la scène ou de sa position relative par rapport à la cible visée.

Ces moyens de compensation 42 sont connectés aux moyens de déphasage 43. Dans cet exemple de réalisation, ils sont également connectés à un récepteur GPS intégré au système optronique qui leur transmet les coordonnées spatiales du système optronique dans la scène.

Ces moyens de compensation 42 comportent des premiers moyens de compensation 44 du déphasage *ϕ_{B}* induit par le temps de propagation du premier signal horaire de référence entre l'émetteur du premier signal horaire de référence et le système optronique fonctionnant sur la scène. Ce déphasage *ϕ_{B}* dépend ainsi des coordonnées spatiales du système optronique dans la scène par rapport aux coordonnées spatiales connues de l'émetteur employé.

Si tous les équipements optroniques d'une même scène sont synchronisés sur un même émetteur et s'ils sont proches les uns des autres, et si leur tolérance de synchronisation le permet, par exemple 300m pour une tolérance de 1µs, ou par exemple 3 km pour une tolérance de 10µs il n'est pas nécessaire de compenser le déphasage *ϕ_{B}* du premier signal de référence Hₜᵣₐ reçu par le récepteur 40 en générant le deuxième signal de référence H_{ref} délivré à l'horloge interne 36.

Les moyens de compensation 42 sont adaptés pour soustraire le deuxième déphasage *ϕ_{B}* à la phase du premier signal horaire de référence reçu et traité par le récepteur et synchronisé sur le TAI, afin de compenser ce deuxième déphasage *ϕ_{B}* induit par le temps de propagation du premier signal horaire de référence.

Les moyens de compensation 44 comportent des moyens de calcul de ce deuxième déphasage *ϕ_{B}* à partir des coordonnées spatiales du système optronique pour prendre en compte le temps de propagation du premier signal horaire de référence de l'émetteur 41 au système optronique afin que tous les systèmes optroniques d'un même parc 10 soient synchronisés en phase.

En outre, les moyens de compensation 42 comportent des seconds moyens de compensation 46 d'un troisième déphasage *ϕ_{C}* induit par le temps de propagation des impulsions électromagnétiques entre la cible illuminée et le système optronique fonctionnant sur la scène.

Ce troisième déphasage *ϕ_{C}* dépend ainsi de la distance relative du système optronique à la cible.

Pour cela, le système optronique comporte des moyens de mesure de la distance relative du système optronique à la cible adaptés à transmettre cette distance aux seconds moyens de compensation 46.

Par exemple, les moyens de mesure de la distance relative du système optronique à la cible sont des télémètres laser.

Les seconds moyens de compensation 46 comportent des moyens de calcul de ce troisième déphasage *ϕ_{C}* à partir de la distance relative du système optronique à la cible pour prendre en compte le temps de propagation de la lumière entre la cible 28 illuminée et le système optronique afin que tous les systèmes optroniques d'un même parc visant la même cible 10 soient synchronisés sur la cible compte tenu du temps de propagation.

Les moyens de déphasage 43 sont adaptés pour soustraire le troisième déphasage *ϕ_{C}* au signal horloge interne délivré par l'horloge interne et synchronisé sur le TAI, afin de compenser ce troisième déphasage *ϕ_{C}* induit par le temps de propagation de la lumière entre la cible et le système optronique.

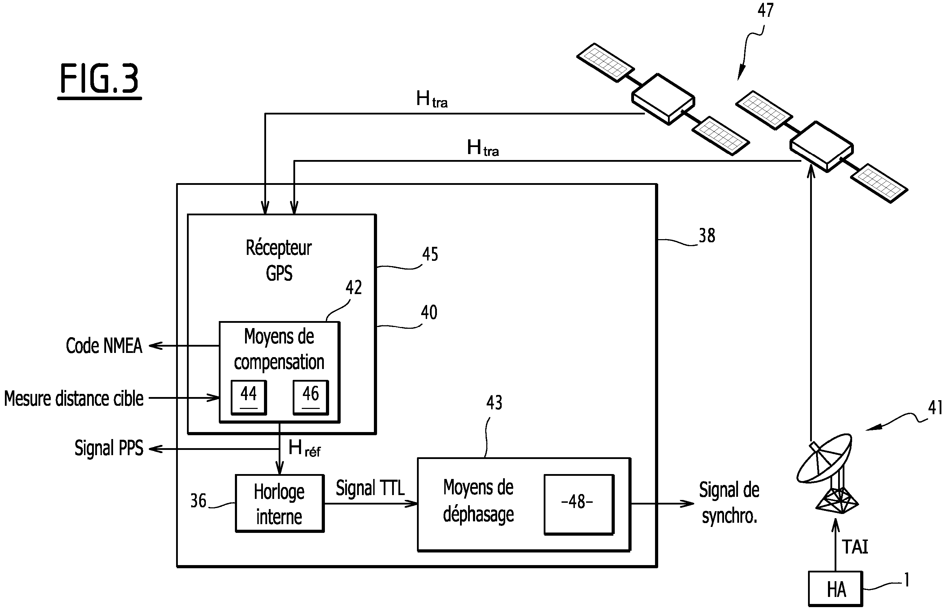

Selon un second mode de réalisation illustré sur la figure 3, le réseau de communication est un système GPS (pour *"global positioning system"* en anglais) comportant des satellites GPS 47 adaptés à recevoir le signal TAI. De façon connue, les satellites GPS 47 comportent une horloge atomique secondaire synchronisée sur le TAI.

En outre, les satellites GPS 47 sont aptes à générer chacun le premier signal horaire de référence Hₜᵣₐ et à le transmettre au récepteur 40 du module de synchronisation 45. Le premier signal horaire de référence Hₜᵣₐ est ainsi indépendant des systèmes optroniques et issu d'un équipement différent des systèmes optroniques.

De préférence, le récepteur 40 du premier signal horaire de référence est un récepteur GPS recevant les signaux horaires de référence, transmis par plusieurs satellites, représentatif du temps atomique international (TAI) et adapté, de façon connue, pour générer et transmettre un signal d'une impulsion par seconde (PPS pour *"pulse per seconde",* en anglais) calée très précisément sur le TAI avec une précision de la classe de la microseconde pour des récepteurs grand public.

Selon une variante, la précision est de l'ordre de la nanoseconde.

La stabilité de l'horloge interne de précision est de 1 ppm pour une précision de 1 µs et un rafraîchissement donné par le signal PPS.

Parallèlement, il est connu que le récepteur GPS est adapté pour générer et transmettre un signal série, appelé code NMEA, pour *"National Marine Electronics Association"* en anglais, délivrant un certain nombre d'informations dont la date et le temps absolu UTC de la seconde courante. Il est connu que ce code ou norme est une spécification pour la communication entre équipements marins dont les équipements GPS. Le code NMEA permet de dater en absolu le signal PPS sur chaque récepteur.

En outre, le récepteur GPS 40 comprend les moyens de compensation 44, 46 adaptés pour générer le deuxième signal horaire de référence H_{ref} à partir du premier signal horaire de référence Hₜᵣₐ délivrés par plusieurs satellites. Ces moyens 44, 46 ont déjà été décrits précédemment.

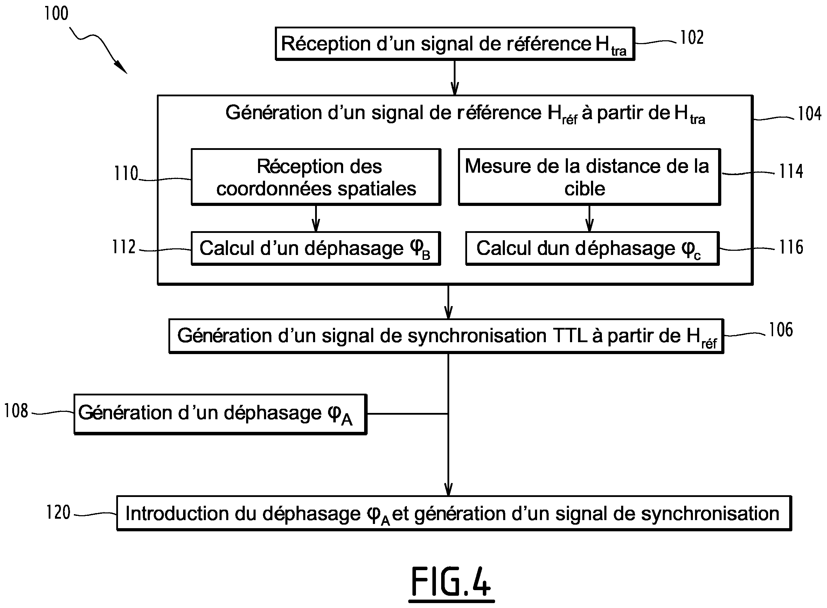

Chaque module 38 de génération d'un signal de synchronisation d'un système optronique 20, 22, 24 du parc d'équipements 26 met en oeuvre un procédé 100 de synchronisation selon l'invention qui va maintenant être décrit en regard de la figure 4. Néanmoins, il ne sera décrit que pour un seul système optronique et donc un seul module de synchronisation.

Le procédé de synchronisation 100 débute par une étape 102 de réception du premier signal horaire transmis Htra par le récepteur 40 du module de synchronisation 38.

Au cours d'une étape 104, le module propre de synchronisation 45 génère un deuxième signal comportant le code horaire de référence H_{ref} à partir du premier signal comportant le code horaire de référence Hₜᵣₐ et le transmet à l'horloge interne de précision 36 du module 38 de génération d'un signal de synchronisation.

Pour générer ce deuxième signal de référence H_{ref}, le récepteur 40 transmet le premier signal horaire de référence Htra, aux moyens de compensation 42, afin de prendre en compte un éventuel retard variable engendré par le temps de transmission de ce premier signal au sein du réseau.

Cette étape 104 comporte une sous-étape 110 de réception des coordonnées spatiales du système optronique par le récepteur GPS, par exemple, et de transmission de celles-ci aux premiers moyens de compensation 44 du deuxième déphasage *ϕ_{B}* induit par le temps de propagation du premier signal horaire de référence entre l'émetteur du premier signal horaire de référence et le système optronique.

Cette sous-étape 110 est suivie d'une étape 112 de calcul de ce deuxième déphasage *ϕ_{B}* à partir des coordonnées spatiales du système optronique pour prendre en compte le temps de propagation du premier signal horaire de référence au système optronique. Ce calcul 112 est réalisé, si nécessaire, en continu afin de mettre à jour ce deuxième déphasage en fonction du déplacement du système optronique dans la scène.

Parallèlement, une sous-étape 114 de mesure de la distance relative du système optronique à la cible est réalisée par les moyens de mesure de la distance du système optronique, tels qu'un télémètre laser.

Les moyens de mesure transmettent cette distance calculée aux moyens de calcul des seconds moyens de compensation 46 afin qu'ils calculent, au cours d'une sous-étape 116, un troisième déphasage *ϕ_{C}* induit par le temps de propagation des impulsions électromagnétiques entre la cible illuminée et le système optronique fonctionnant sur la scène.

Ce troisième déphasage *ϕ_{C}* est ainsi calculé à partir de la distance relative du système optronique à la cible pour prendre en compte ce temps de propagation de la lumière entre la cible 28 illuminée et le système optronique.

Ce calcul 116 est réalisé, si nécessaire, en continu afin de mettre à jour ce troisième déphasage en fonction du déplacement du système optronique ou de la cible dans la scène.

Le deuxième signal de référence H_{ref} est généré à partir du premier signal de référence Hₜᵣₐ et de ces deuxième et troisième déphasages calculés.

Dans le cas d'un émetteur tel que le DCF77 (situé prés de Francfort) ou celui de l'émetteur d'Allouis (situé dans le Cher en France), la connaissance de la distance de cet émetteur permet d'estimer le temps de propagation et ainsi le retard dans la réception du premier signal Hₜᵣₐ.

Dans les cas d'un récepteur GPS, si un nombre suffisant de satellites 47 du système GPS, de préférence supérieur à 3, sont détectés, le récepteur 40 reçoit des signaux horaires codés de chacun de ces satellites. Ces derniers ont une orbite connue dans un référentiel x, y, z porté par le centre de gravité de la Terre. L'analyse des retards relatifs de ces signaux horaires reçus par le récepteur GPS 40, permettent de contraindre sa position x, y, z dans le trièdre de référence. Il est connu qu'avec au moins la réception des signaux de quatre satellites, il est possible ainsi de positionner en absolu le récepteur avec une précision de quelques mètres. En connaissant sa position relative par rapport aux satellites le retard de transmission des signaux respectifs de chaque satellites est déterminé.

Selon une variante, si le récepteur 40 est un récepteur GPS, celui-ci génère en outre un signal PPS calé avec une très bonne précision sur le TAI ou l'UTC. Cette étape est connue par l'homme du métier et ne sera donc pas détaillée ici. L'ensemble de ce principe est applicable pour tout autre système de positionnement par satellite GNSS (pour « Global Navigation Satellite System » en anglais) dont l'exemple le plus connu est le GPS, mais il en existe au moins un autre, le Glonass russe et dans le futur le système Galileo.

Le procédé se poursuit par une étape 106 de génération d'un signal de synchronisation du type signal TTL par l'horloge interne de type oscillateur stable à haute fréquence (un quartz, une horloge atomique par exemple) à partir du deuxième signal horaire de référence H_{ref}.

Ce signal de synchronisation est construit à partir du prélèvement des fréquences sous harmoniques des fréquences utiles desorganes à contrôler du système optronique. Par exemple, une camera vidéo nécessite un signal de synchronisation ayant une fréquence de 25Hz ou 50Hz.

Ce signal est ensuite délivré aux moyens de déphasage 43 du module 38 de génération d'un signal de synchronisation afin qu'ils lui ajoutent un premier déphasage *ϕ_{A}* prédéterminé au cours d'une étape 108.

Ce déphasage *ϕ_{A}* a été préalablement stocké dans les moyens de stockage des moyens de déphasage 43 avant une mission impliquant les systèmes optroniques fonctionnant sur la scène.

Selon une variante, le premier déphasage *ϕ_{A}* est généré par les moyens de génération 48 des moyens de déphasage 43 par un code pseudo aléatoire prédéterminé enregistré dans les moyens de stockage ou calculé par un algorithme des moyens de génération 48.

Après calcul, le premier déphasage *ϕ_{A}* est enregistré dans ces moyens de stockage.

Ainsi le module 38 permet de générer un signal de synchronisation calé sur le temps atomique international (TAI) qui par la suite est utilisé pour commander les moyens d'émission 30 et/ou les moyens de détection 34 des trains d'impulsions électromagnétiques.

Par exemple, une caméra reçoit un signal de commande synchronisé sur le signal généré par le module 38 afin qu'elle fonctionne à une fréquence ou cadence d'acquisition de 50 images par seconde ou bien un laser afin qu'il émette 10 impulsions par seconde.

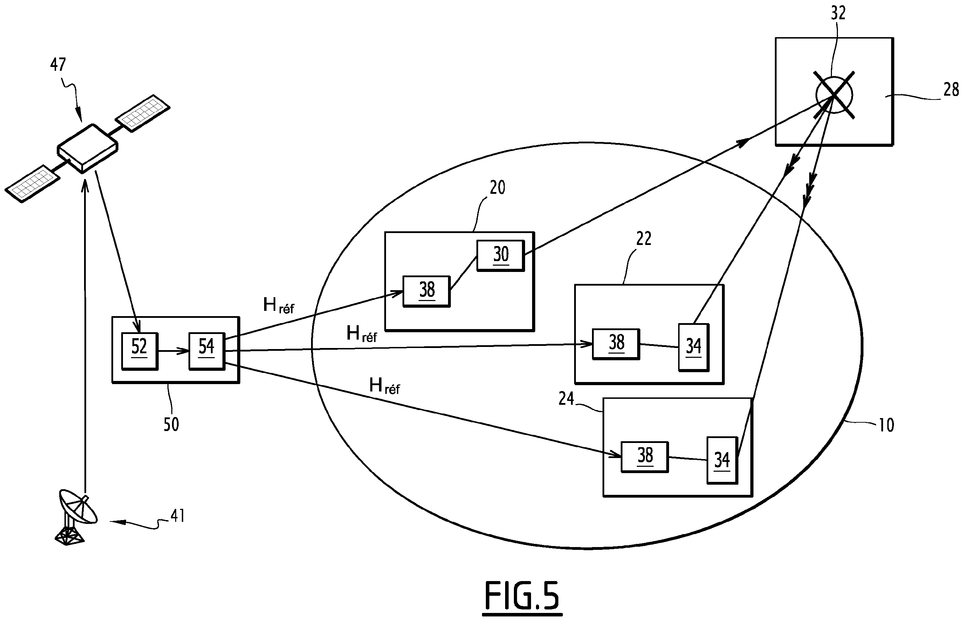

Selon un troisième mode de réalisation de l'invention illustré sur la figure 5, l'ensemble des systèmes optroniques est synchronisé par un module externe de synchronisation 50. Ce module est dit externe, car il n'est pas intégré dans un des systèmes optroniques devant fonctionner de façon synchrone dans la scène.

Chaque système optronique 20, 22, 24 comprend une horloge interne de précision 36 et un module de synchronisation 38 de l'horloge interne 36 avec un signal horaire de référence, identiques à ceux décrits dans le premier mode de réalisation.

Le module externe 50 de synchronisation comprend un récepteur 52 d'un signal horaire de référence H_{ref} connecté à un émetteur 54 intégré au module externe de synchronisation 50. Cet émetteur 54 est adapté à transmettre ce signal horaire de référence H_{ref} à chaque module 38 de génération d'un signal des systèmes optroniques, en particulier au récepteur 40 du module de synchronisation.

Ce récepteur 52 d'un signal horaire de référence H_{ref} est identique à ceux décrit précédemment dans les modules 38 de génération d'un signal de synchronisation des systèmes optroniques et ne sera donc pas détaillé ici.

Un avantage du procédé de synchronisation selon l'invention est que tous les systèmes optroniques d'un même parc destinés à fonctionner simultanément selon un mode collaboratif entre eux sont ainsi synchronisés sans avoir à rechercher une synchronisation.

C'est en particulier le cas pour des systèmes optroniques réalisant des missions de type collaboratif, par exemple des systèmes de guidage laser et des munitions guidées par ces systèmes.

En effet, au cours de ce type d'application qui porte sur la détection de tâche laser impulsionnelle pour guider les munitions, le procédé selon l'invention permet de réduire considérablement le temps d'intégration de la caméra du système de guidage laser utilisée pour la détection de la tache laser et ainsi d'augmenter ses performances avec de plus une capacité à fonctionner dès la première impulsion laser émise et observée.

En outre, deux parcs de systèmes optroniques ayant des déphasages ϕA différents ne sont pas compatibles entre eux ou peuvent fonctionner dans des conditions ou des performances très dégradées comparées à des équipements d'un même parc synchronisés.

L'invention n'est pas limitée aux exemples de réalisation décrits et représentés, en particulier elle peut être étendue à tout type de systèmes optroniques par exemple : des cameras cherchant à visualiser une tache de désignation laser, des brouilleurs laser sans effet collatéral, des moyens d'observation 3D, stéréoscopiques, ou multi-caméras mobiles de scènes, des systèmes d'imagerie semi actives.

## Revendications

1. Procédé (100) de synchronisation d'une pluralité de systèmes optroniques (20, 22, 24), les systèmes optroniques (20, 22, 24) fonctionnant simultanément sur une même scène, chaque système optronique (20, 22, 24) étant destiné à émettre et/ou recevoir de la lumière d'une cible (28) de la scène et chaque système optronique comportant un module (38) de génération d'un signal de synchronisation comprenant une horloge interne de précision (36) et un module propre de synchronisation (45) de l'horloge interne (36) avec un signal horaire de référence, l'horloge interne (36) étant propre à délivrer un signal horloge interne, le procédé comportant les étapes suivantes :
- réception d'un premier signal horaire de référence (Hₜᵣₐ) et génération d'un deuxième signal horaire de référence (H_{ref}) à partir du premier signal horaire de référence (Hₜᵣₐ) par chaque module propre de synchronisation (45), le premier signal horaire de référence (Hₜᵣₐ) étant indépendant des systèmes optroniques et issu d'un équipement différent des systèmes optroniques, et
- synchronisation de l'horloge interne de chaque système optronique avec le deuxième signal horaire de référence (H_{ref}) par le module propre de synchronisation (45),
le procédé comprenant en outre pour chaque système optronique (20, 22, 24) une étape de compensation d'un déphasage (*ϕ_{C}*) induit par le temps de propagation de la lumière entre la cible (28) illuminée et le système optronique (20, 22, 24) fonctionnant sur la scène.

2. Procédé de synchronisation selon la revendication 1, **caractérisé en ce qu'**il comprend une étape d'addition d'un même déphasage (*ϕ_{A}*) au signal horaire interne délivré par l'horloge interne (36) de chaque système optronique d'un même parc, les systèmes optroniques étant synchronisés en phase.

3. Procédé de synchronisation selon la revendication 2, **caractérisé en ce que** le déphasage (*ϕ_{A}*) est généré de façon pseudo aléatoire.

4. Procédé de synchronisation selon l'une quelconque des revendications 1 à 3, **caractérisé en ce que** le premier signal horaire de référence (Hₜᵣₐ) est un signal représentant le temps atomique international ou le temps universel coordonné diffusé par un réseau de communication.

5. Procédé de synchronisation selon la revendication 4, **caractérisé en ce que** le réseau de communication est un système GPS ou un réseau hertzien.

6. Procédé de synchronisation selon l'une quelconque des revendications 1 à 5, **caractérisé en ce qu'**il comprend pour chaque système optronique une étape de compensation d'un déphasage (*ϕ_{B}*) induit par le temps de propagation du premier signal horaire de référence (Hₜᵣₐ) entre l'émetteur du premier signal horaire de référence (Hₜᵣₐ) et le système optronique fonctionnant sur la scène.

7. Ensemble (10) de systèmes optroniques (20, 22, 24), les systèmes optroniques (20, 22, 24) fonctionnant simultanément sur une même scène de façon synchrone, chaque système optronique étant destiné à émettre et/ou recevoir de la lumière d'une cible (28) de la scène et chaque système optronique (20, 22, 24) comportant un module (38) de génération d'un signal de synchronisation comprenant une horloge interne de précision (36) et un module propre de synchronisation (45) de l'horloge interne (36) avec un signal horaire de référence, l'ensemble de systèmes optroniques comprenant un récepteur (40 ; 52) d'un premier signal horaire de référence (Hₜᵣₐ) à partir duquel est généré un deuxième signal horaire de référence (H_{ref}), le premier signal horaire de référence (Hₜᵣₐ) étant indépendant des systèmes optroniques et issu d'un équipement différent des systèmes optroniques, l'ensemble (10) étant adapté pour mettre en œuvre un procédé de synchronisation selon l'une quelconque des revendications 1 à 6.

8. Ensemble (10) de systèmes optroniques (20, 22, 24) selon la revendication 7, **caractérisé en ce que** chaque module propre de synchronisation (38) comprend un récepteur (40) du premier signal horaire de référence (Hᵣₜᵣₐ).

9. Ensemble (10) de systèmes optroniques (20, 22, 24) selon la revendication 7, **caractérisé en ce que** le récepteur (52) du premier signal horaire de référence (Hₜᵣₐ) est intégré dans un module externe de synchronisation (50) non intégré dans l'un des systèmes optroniques.

## Patentansprüche

1. - Verfahren (100) zum Synchronisieren einer Vielzahl von optronischen Systemen (20, 22, 24), wobei die optronischen Systeme (20, 22, 24) gleichzeitig auf einer gleichen Bühne betrieben werden, wobei jedes optronische System (20, 22, 24) dazu bestimmt ist, Licht von einem Ziel (28) der Bühne auszusenden und/oder zu empfangen, und jedes optronische System ein Modul (38) zum Erzeugen eines Synchronisationssignals umfasst, umfassend eine interne Präzisionsuhr (36) und ein eigenes Synchronisationsmodul (45) der internen Uhr (36) mit einem Referenzzeitsignal, wobei die interne Uhr (36) dazu geeignet ist, um ein internes Uhrsignal bereitzustellen, das Verfahren umfassend die folgenden Schritte:
- Empfangen eines ersten Referenzzeitsignals (Hₜᵣₐ) und Erzeugen eines zweiten Referenzzeitsignals (H_{ref}) anhand des ersten Referenzzeitsignals (Hₜᵣₐ) durch jedes eigene Synchronisationsmodul (45), wobei das erste Referenzzeitsignal (Hₜᵣₐ) von den optronischen Systemen unabhängig ist und aus einer von den optronischen Systemen verschiedenen Ausrüstung stammt, und
- Synchronisieren der internen Uhr von jedem optronischen System mit dem zweiten Referenzzeitsignal (H_{ref}) durch das eigene Synchronisationsmodul (45),
das Verfahren ferner umfassend für jedes optronische System (20, 22, 24) einen Schritt zum Kompensieren einer Phasenverschiebung (*ϕ*_{c}), die durch die Propagationszeit des Lichts zwischen dem beleuchteten Ziel (28) und dem auf der Bühne betriebenen optronischen System (20, 22, 24) induziert wird.

2. Synchronisationsverfahren nach Anspruch 1, **dadurch gekennzeichnet, dass** es einen Schritt eines Hinzufügens einer gleichen Phasenverschiebung (*ϕ_{A}*) zu dem internen Zeitsignal umfasst, das von der internen Uhr (36) von jedem optronischen System eines gleichen Parks bereitgestellt wird, wobei die optronischen Systeme in Phase synchronisiert werden.

3. - Synchronisationsverfahren nach Anspruch 2, **dadurch gekennzeichnet, dass** die Phasenverschiebung (*ϕ_{A}*) pseudo-zufällig erzeugt wird.

4. - Synchronisationsverfahren nach einem der Ansprüche 1 bis 3, **dadurch gekennzeichnet, dass** das erste Referenzzeitsignal (Hₜᵣₐ) ein Signal ist, das die internationale Atomzeit oder die koordinierte Universalzeit darstellt, die über ein Kommunikationsnetzwerk ausgestrahlt wird.

5. - Synchronisationsverfahren nach Anspruch 4, **dadurch gekennzeichnet, dass** das Kommunikationsnetzwerk ein GPS-System oder ein Funknetzwerk ist.

6. - Synchronisationsverfahren nach einem der Ansprüche 1 bis 5, **dadurch gekennzeichnet, dass** es für jedes optronische System einen Schritt zum Kompensieren einer Phasenverschiebung (*ϕ_{A}*) umfasst, die durch die Propagationszeit des ersten Referenzzeitsignals (Hₜᵣₐ) zwischen dem Sender des ersten Referenzzeitsignals (Hₜᵣₐ) und dem auf der Bühne betriebenen optronischen System induziert wird.

7. - Anordnung (10) von optronischen Systemen (20, 22, 24), wobei die optronischen Systeme (20, 22, 24) gleichzeitig auf einer Bühne synchron betrieben werden, wobei jedes optronische System dazu bestimmt ist, Licht von einem Ziel (28) der Bühne auszusenden und/oder zu empfangen, und jedes optronische System (20, 22, 24) umfassend ein Modul (38) zum Erzeugen eines Synchronisationssignals mit einer internen Präzisionsuhr (36) und ein eigenes Synchronisationsmodul (45) der internen Uhr (36) mit einem Referenzzeitsignal, die Anordnung der optronischen Systeme umfassend einen Empfänger (40; 52) eines ersten Referenzzeitsignals (Hₜᵣₐ), anhand dessen ein zweites Referenzzeitsignal (H_{ref}) erzeugt wird, wobei das erste Referenzzeitsignal (Hₜᵣₐ) von den optronischen Systemen unabhängig ist und aus einer von den optronischen Systemen verschiedenen Ausrüstung stammt, wobei die Anordnung (10) angepasst ist, um ein Synchronisationsverfahren nach einem der Ansprüche 1 bis 6 durchzuführen.

8. - Anordnung (10) von optronischen Systemen (20, 22, 24) nach Anspruch 7, **dadurch gekennzeichnet, dass** jedes eigene Synchronisationsmodul (38) einen Empfänger (40) des ersten Referenzzeitsignals (Hᵣₜᵣₐ) umfasst.

9. - Anordnung (10) von optronischen Systemen (20, 22, 24) nach Anspruch 7, **dadurch gekennzeichnet, dass** der Empfänger (52) des ersten Referenzzeitsignals (Hₜᵣₐ) in ein externes Synchronisationsmodul (50) integriert ist, das nicht in eines der optronischen Systeme integriert ist.

## Claims

1. - A method (100) of synchronising a plurality of optronic systems (20, 22, 24), the optronic systems (20, 22, 24) operating simultaneously on one and the same scene, each optronic system (20, 22, 24) being intended to emit and / or receive light from a target (28) of the scene and each optronic system comprising a module (38) for generating a synchronization signal comprising an internal precision clock (36) and a proper synchronisation module (45) of the internal clock (36) with a reference time signal, the internal clock (36) being able to deliver an internal clock signal, the method comprising the following steps :
- reception of a first reference time signal (Hₜᵣₐ) and generation of a second reference time signal (H_{ref}) from the first reference time signal (Hₜᵣₐ) by each proper synchronisation module (45), the first reference time signal (Hₜᵣₐ) being independent of the optronic systems and emanating from an item of equipment different from the optronic systems, and
- synchronisation of the internal clock of each optronic system with the second reference time signal (H_{ref}) by the proper synchronisation module (45),
the method comprising in addition for each optronic system (20, 22, 24) a step of compensating for a phase shift (*ϕ*_{C}) induced by the propagation time of light between the illuminated target (28) and the optronic system (20, 22, 24) operating on the scene.

2. - A synchronisation method according to claim 1, **characterised in that** it includes a step of addition of a same given phase shift (*ϕ*_{A}) to the internal time signal delivered by the internal clock (36) of each optronic system of the same given fleet, the optronic systems being synchronised in phase.

3. - A synchronisation method according to claim 2, **characterised in that** the phase shift (*ϕ*_{A}) is generated in a pseudo random manner.

4. - A synchronisation method according to any one of claims 1 to 3, **characterised in that** the first reference time signal (Hₜᵣₐ) is a signal that is representative of the International Atomic Time or the Coordinated Universal Time broadcast by a communication network.

5. - A synchronisation method according to claim 4, **characterised in that** the communication network is a GPS system or a microwave radio system.

6. - A synchronisation method according to any one of claims 1 to 5, **characterised in that** it comprises for each optronic system a step of compensating for a phase shift (*ϕ*_{B}) induced by the propagation time of the first reference time signal (Hₜᵣₐ) between the transmitter of the first reference time signal (Hₜᵣₐ) and the optronic system operating on the scene.

7. - A set (10) of optronic systems (20, 22, 24), the optronic systems (20, 22, 24) operating simultaneously on one and the same scene in a synchronous fashion, each optronic system being intended to emit and / or receive light from a target (28) of the scene and each optronic system (20, 22, 24) comprising a module (38) for generating a synchronization signal comprising an internal precision clock (36) and a proper synchronisation module (45) of the internal clock (36) with a reference time signal, the set of optronic systems comprising a receiver (40, 52) of a first reference time signal (Hₜᵣₐ) from which is generated a second reference time signal (H_{ref}), the first reference time signal (Hₜᵣₐ) being independent of the optronic systems and emanating from an item of equipment different from the optronic systems, the set being adapted to implement a synchronisation method according to any one of claims 1 to 6.

8. - A set (10) of optronic systems (20, 22, 24) according to claim 7, **characterised in that** each proper synchronisation module (38) includes a receiver (40) for the first reference time signal (Hrtra).

9. - A set (10) of optronic systems (20, 22, 24) according to claim 7, **characterised in that** the receiver (52) for the first reference time signal (Hₜᵣₐ) is integrated within an external synchronisation module (38) non integrated in one of the optronic systems.
